# EUROPÄISCHE PATENTSCHRIFT

(11) **EP 3 853 478 B1**
(45) Veröffentlichungstag und Bekanntmachung des Hinweises auf die Patenterteilung: **27.11.2024**
(21) Anmeldenummer: 20703169.1
(22) Anmeldetag: 27.01.2020
(51) Int. Cl.: F03D 80/60, F28D 1/053, F28F 1/12

(54) **KÜHLER**
COOLER
DISPOSITIF DE REFROIDISSEMENT

(30) Priorität: 31.01.2019 DE 102019000723
(43) Veröffentlichungstag der Anmeldung: 28.07.2021
(73) Patentinhaber: Hydac Cooling GmbH, 66280 Sulzbach/Saar (DE)
(72) Erfinder: WOLFANGER, Thomas, 66540 Neunkirchen (DE)
(74) Vertreter: Bartels und Partner, Patentanwälte
(86) Internationale Anmeldenummer: PCT/EP2020/051906
(87) Internationale Veröffentlichungsnummer: WO 2020/156995

(56) Entgegenhaltungen:
- WO-A1-03/076860
- WO-A1-2018/100738
- DE-U1- 202011 000 831
- JP-A- 2010 025 462
- US-A1- 2009 020 260
- US-A1- 2012 024 510
- US-A1- 2013 068 438
- US-A1- 2014 318 753

## Beschreibung

Die Erfindung betrifft einen Kühler mit den Merkmalen im Oberbegriff von Anspruch 1.

Kühler, die als Flüssigkeits-Luft-Wärmetauscher arbeiten, sind Stand der Technik, siehe beispielsweise DE 10 2014 001 703 A1. Um die für die jeweiligen Einsatzzwecke erforderlichen Kühlleistungen zu erreichen, werden Luft-Flüssigkeits-Kühler üblicherweise als aktive Kühler mit Kühlgebläsen betrieben, die in den Strömungsräumen die für den effektiven Wärmeaustausch erforderliche Luftströmung erzeugen. Um die mit dem Einsatz von Gebläsen verbundenen Einrichtungs- und Energiekosten zu vermeiden, ist es, siehe DE 10 2011 107 013 A1, bekannt, bei Kühlern, die für die Abfuhr der bei Windkraftanlagen anfallenden Verlustwärme an die Umgebung vorgesehen sind, für die Erzeugung der Kühlluft die die Gondel oder den Turm umströmende Windströmung auszunutzen. Wie in dem genannten Dokument gezeigt, ist im Bestreben, eine ausreichend hohe Strömungsgeschwindigkeit in den Strömungsräumen zu erreichen, der jeweilige Wärmetauscher an der Windkraftanlage an einer Stelle angeordnet, an der die Luftströmung durch die aus der Geometrie der Windkraftanlage resultierende Verdrängungswirkung beschleunigt ist.

Diese Lösung ist insofern nicht optimal, als der Zwang zur Anordnung des Wärmetauschers an bestimmter Stelle die freie Gestaltung der Geometrie von Gondel und/oder Turm behindert. Auch lässt die Effektivität des Wärmeaustausches trotz spezieller Lageanordnung des Kühlers zu wünschen übrig, so dass ein zusätzlicher Ventilator als aktiver Strömungsverstärker erforderlich sein kann.

Durch DE 21 63 951 B2 ist ein gattungsgemäßer Wärmetauscher bekannt mit einem im Inneren eines von Fluid durchströmten Rohres angeordneten Störelement, welches aus einem dünnen Metallband mit in Reihen angeordneten, aus Durchbrechungen abgebogenen, vorspringenden Laschen besteht, deren abgebogene Enden an der Rohrinnenwand anliegen, wobei die Laschen jeweils mit einem Fenster versehen sind, und wobei in dem Metallband zusätzlich zwischen den Durchbrechungen quer angeordnete Ausnehmungen vorgesehen sind. Hierdurch soll eine bessere Durchwirbelung des Strömungsmittels erfolgen und dadurch ein guter Wärmeübergang sichergestellt werden. Aufgrund der eingebrachten Hemmung mittels des genannten Störelements kommt es aber in jedem Fall zu Druckverlusten, auch wenn diese als gering bezeichnet werden, und es kommt zu einer längeren Verweildauer des zu kühlenden Fluids im Wärmetauscher, was den Durchsatz an zu kühlendem Fluid verringert und somit die Gesamt-Energiebilanz des Wärmetauschers verschlechtert.

Durch WO 03/076860 A1 ist ein weiterer Kühler in Form eines Wärmetauschers mit den Merkmalen im Oberbegriff von Anspruch 1 bekannt, insbesondere für Kraftfahrzeuge, mit Flachrohren, die innen von einem ersten Fluid durchströmbar sind, die außen mit einem zweiten Fluid beaufschlagbar sind, die im Wesentlichen quer zur Strömungsrichtung des zweiten Fluids und parallel zueinander angeordnet und voneinander beabstandet sind und dabei den Wärmetauscher durchdringende Strömungswege für das zweite Fluid ausbilden, wobei in den Strömungswegen Kühlrippen angeordnet sind, die sich jeweils zwischen benachbarten Flachrohren erstrecken, wobei als Kühlrippen mehrere in Strömungsrichtung des zweiten Fluids hintereinander angeordnete Wellrippen vorgesehen sind, die zueinander seitlich versetzt sind. Die Flachrohre sind zur Strömungsführung mit Strömungsleitelementen versehen und endseitig an Sammelleitungen oder Sammelrohre fluidführend angeschlossen. Die Wellrippen bilden jeweils einzelne, nur eine Lage einer Reihe mäandernder Finnen aus, die in Hintereinanderanordnung, quer zur Durchströmungsrichtung der Flachrohre gesehen, einen Versatz zueinander aufweisen und die für eine verbesserte Wärmeübertragung des zu führenden zweiten Fluids kiemenartige Schlitze in den Rippenwänden aufweisen, was auch zur Erhöhung der Stabilität des Wärmetauschers mit beiträgt.

Weitere Kühler gehen aus der DE 20 2011 000 831 U1, der US 2012/ 0024510 A1, der US 2013/0068438 A1, der US 2009/0020260 A1, der US 2014/0318753 A1, der JP 2010-025462 A und der WO 2018/100738 A1 hervor.

Ausgehend von diesem Stand der Technik stellt sich die Erfindung die Aufgabe, einen Kühler der eingangs genannten Gattung zur Verfügung zu stellen, der einen hohen Wirkungsgrad hat, eigenstabil und kostengünstig in der Realisierung ist.

Erfindungsgemäß ist diese Aufgabe durch einen Kühler gelöst, der die Merkmale des Patentanspruchs 1 in seiner Gesamtheit aufweist.

Gemäß dem Kennzeichen von Anspruch 1 ist vorgesehen, dass sich die Finnenreihen und die Kanäle zwischen zwei medienführenden Hauptholmen erstrecken, die die Fluidverbindungen mit den Kanälen bilden und eine rechteckförmige Stirnseite als Kühlerfläche aufspannen, dass die einzelnen Kühlelemente in Stapelbauweise mit den parallel zueinander verlaufenden Kanälen gebildet sind und jedes einzelne Kühlelement einen Verbund mit zwei Lagen der mäandernden Finnen aufweist, dass die beiden Lagen eines Kühlelementes von einer Trennwand separiert sind, die jeweils in einer horizontalen Ebene verläuft, und dass die Kanalwände eines jeden Kanals eine Materialdicke in der Wandstärke einer jeweiligen Finne aufweisen.

Dadurch, dass der jeweils eine Strömungsraum frei von Hindernissen eine laminare Durchströmung des zuordenbaren Kanals mit dem flüssigen Medium in einer Durchströmungsrichtung ermöglicht, ist ein hoher Durchsatz an zu kühlendem, flüssigem Medium erreicht, was einen energetisch günstigen Betrieb mit hoher Kühlleistung ergibt.

Dadurch, dass ferner die Höhe einer jeden Finne quer zur Durchströmungsrichtung des flüssigen Mediums gesehen mindestens dieselbe Höhe hat wie der freie Durchströmungsquerschnitt des Strömungsraums des benachbart angeordneten Kanals, parallel zur Erstreckung der jeweiligen Finne gesehen, und dass in jeder Lage eine Mehrzahl von Finnenreihen mehrerer Finnen hintereinander angeordnet ist, die jeweils in Durchströmungsrichtung des Kanals gesehen einen Versatz zueinander aufweisen, ist aufgrund der unmittelbar übereinander angeordneten Stapellagen des jeweiligen Kühlelementes ein sehr hoher Luftdurchsatz gegenüber einlagigen Systemen erreicht, woraus sich ein hoher Wirkungsgrad ergibt, so dass sich der erfindungsgemäße Kühler als passiver, die umgebende Luftströmung ausnutzender Wärmeaustauscher mit besonderem Vorteil bei Windkraftanlagen, beispielsweise nach der DE 10 2012 017 462 A1, gemäß der Merkmalsausgestaltung des Patentanspruchs 13 einsetzen lässt. Ohne Wandschwächung durch zusätzliche Kühlleitelemente, wie kiemenartige Schlitze, ist hierdurch eine störungsfreie Strömungsführung bei hohem Wärmeaustausch erreicht, die darüber hinaus besonders eigenstabil und kostengünstig realisiert werden kann.

Die von Luft angeströmten Finnen aufeinanderfolgender Etagen der Strömungsräume in Stapelbauweise stehen jeweils mit einem zugeordneten

Kühlmedienkanal in Wärmekontakt. Dies ermöglicht eine wesentlich erhöhte Wärmeabfuhr aus dem zu kühlenden flüssigen Medium, so dass sich der erfindungsgemäße Kühler durch eine hohe Kühlleistung auch bei begrenzten Strömungsgeschwindigkeiten der Kühlluft auszeichnet und dadurch mit besonderem Vorteil und bei frei wählbarer Lageanordnung an Windkraftanlagen einsetzbar ist. Finnen mit entsprechend großer Steghöhe ermöglichen dabei einen hohen Durchsatz an Kühlluft mit entsprechend hohem Wärmeübertrag zwischen den Finnen des Kühlers und der Kühlluft.

Bei einem bevorzugten Ausführungsbeispiel ist vorgesehen, dass zumindest ein Teil der Finnen einer jeden Lage aneinander anschließend sich jeweils stegartig unter Bildung einer Wellenform zwischen zwei jeweils gegenüberliegenden Umlenkstellen in der Art von Verbindungsstegen erstreckt und dass in einer gemeinsamen, an die benachbart angeordneten Kanäle eines Kühlelements sich anschließenden Ebene an dieser anliegend Umlenkstellen zweier benachbarter Lagen deckungsgleich aufeinander zugewandt sind.

Miteinander, in einer vertikalen Ebene bei aufgestelltem Kühler gesehen, deckungsgleiche Finnenbauteile ermöglichen eine vereinfachte Herstellung, da stets dieselbe Form der Blechteile für den Gesamtkühler verwendet werden kann. Als Werkstoff kann ein Blechmaterial, vorzugsweise aus gut wärmeleitendem Aluminiummaterial, vorgesehen sein. Bei einer vorteilhaften Ausführungsform des erfindungsgemäßen Kühlers ist vorgesehen, dass in der jeweiligen Ebene eine Trennwand parallel zur Durchströmungsrichtung des flüssigen Mediums in den Kanälen verläuft. Die im Betrieb des Kühlers jeweils horizontal angeordnete Trennwand erhöht die Stabilität der Lagen der Finnen innerhalb der Gesamtanordnung und vergrößert zugleich den Wärmeübertrag.

Mit Vorteil weist die jeweilige Trennwand dabei dieselbe Materialstärke auf wie die die Wellenform ausbildenden Finnen. Die Verwendung von einheitlichen Blechwanddicken vereinfacht die Herstellung und reduziert deren Kosten.

Mit Vorteil beträgt dabei die Steghöhe einer einzelnen, stegartigen Finne vorzugsweise das Drei- bis Sechsfache, besonders bevorzugt das Fünffache, der Höhe des Strömungsraumes für einen die zu kühlende Flüssigkeit führenden Kanal. Ein Vielfaches an Steghöhe bedeutet zugleich den Erhalt eines Mehrfachen an luftgekühlter Oberfläche der Finnen relativ zum Volumen des zu kühlenden Mediums im jeweils medienführenden Kanal. Dadurch ist ein hoher Durchsatz an Kühlluft und ein großer Wärmeübertrag je einzelnes Kühlelement erreicht, aus denen sich der Kühler in Stapelbauweise zusammensetzt. insoweit ist ein Optimum des Mengenverhältnisses zwischen zu kühlendem Medium und Kühlmedium (Luft) erreicht.

Mit Vorteil ist ferner der Versatz derart gewählt, dass eine zwischen zwei parallel zueinander verlaufenden, zueinander versatzfreien Finnenreihen angeordnete weitere Finnenreihe mit ihrer jeweiligen Finne um einen vorgebbaren axialen Abstand, parallel zu dem jeweiligen Kanal, in dessen Durchströmungsrichtung gesehen, zu den benachbarten Finnen der beiden angrenzenden Finnenreihen versetzt verläuft. Durch den Versatz entsteht eine Art Luftteiler für die Kühlluft mit verbesserter, vergleichmäßigter Strömungsführung, was zu einem besonders effektiven Wärmeübergang führt. Der Lamellenversatz ist auch in stirnseitiger Frontansicht auf den Kühler zu sehen, in dem die versetzte Reihe gegenüber den benachbarten Finnenreihen, in Flüssigkeits-Durchströmungsrichtung gesehen, um den genannten axialen Abstand vorsteht oder eben zurückversetzt ist.

Mit Vorteil kann die Anordnung hierbei so getroffen sein, dass der Versatz zwischen 3 mm und 8 mm, vorzugsweise zwischen 4 mm bis 6 mm, besonders bevorzugt zwischen 5 mm und 5,9 mm, beträgt. Bevorzugt sind hierbei bei Finnen, die zwischen den angrenzenden jeweiligen Kanälen eine größere Höhe oder Länge aufweisen, für den Versatz gleichfalls höhere Werte vorgesehen.

Bei vorteilhaften Ausführungsbeispielen beträgt die Höhe einer einzelnen Finne, quer zur Durchströmungsrichtung eines Kanals gesehen, zwischen 5 mm und 15 mm, vorzugsweise 12 mm, wobei die Gesamttiefe des Kühlers mit mehreren, in einer horizontalen Ebene hintereinander angeordneten Finnenreihen zwischen 60 mm und 90 mm, vorzugsweise bei 63 mm und 82 mm, Tiefe liegt.

Bei besonders bevorzugten Ausführungsbeispielen beträgt die Dicke oder Wandstärke der aus einem Blechmaterial geformten Finnen 0,15 mm bis 0,4 mm, bevorzugt 0,2 mm, und die Dicke einer aus Blechmaterial bestehenden Platte als Trennwand zwischen den Finnenreihen beträgt 0,2 mm bis 0,8 mm, bevorzugt 0,4 mm. Mit Vorteil ist Aluminium als Blechmaterial sowohl für die Finnen als auch für den jeweiligen Kanal vorgesehen.

Bei besonders vorteilhaften Ausführungsbeispielen weist die Mäanderform der jeweiligen Finnenreihen parallel zueinander verlaufende Finnen auf, und zwei benachbarte Finnen der Finnenreihen sind jeweils über die Umlenkstellen respektive die Verbindungsstege miteinander einstückig verbunden, die parallel zu den Kanälen mit deren Begrenzungswänden in deren Durchströmungsrichtung verlaufen. Durch den Parallelverlauf der Verbindungsstege an den Umlenkstellen sind diese mit den Begrenzungswänden der Kanäle vollflächig in Anlage, so dass ausgedehnte Kontaktflächen für die Wärmeleitung von den Finnen zu dem jeweiligen Kanal gebildet sind. Während des Betriebes auftretende Wärmespannungen durch thermisch bedingte Ausdehnung werden über diese Umlenkstellen der mäandernden Finnen ausgeglichen.

Bei einer bevorzugten Ausführungsform des Kühlers bilden 20 bis 48, vorzugsweise 25 bis 63, besonders bevorzugt 54 Kanäle die wirksame Kühlerfläche. Die Vielzahl an Kanälen ermöglicht ein günstiges Verhältnis von Kanaloberfläche zum Volumen des zu kühlenden Mediums und eine besonders effektive Kühlung, insbesondere in Verbindung mit der sonstigen geometrischen Gestaltung des Kühlers.

Weiterer Gegenstand der Erfindung gemäß Patentanspruch 13 ist auch eine Windkraftanlage, bei der mindestens ein Kühler nach einem der Patentansprüche 1 bis 12 einer Gondel der Anlage räumlich zugeordnet ist, zwecks freien Durchströmens der Strömungsräume ohne Lüfterantrieb nur mittels des Flügelluftstroms und/oder der sonstigen rein windgetriebenen Umgebungsluft. Der erfindungsgemäße Kühler ermöglicht eine wesentlich erhöhte Wärmeabfuhr aus dem zu kühlenden, flüssigen Medium, so dass er sich durch eine hohe Kühlleistung, auch bei begrenzten Strömungsgeschwindigkeiten der Kühlluft, auszeichnet und dadurch mit besonderem Vorteil und bei frei wählbarer Lageanordnung an der Gondel von Windkraftanlagen, der Umgebung zugewandt, einsetzen lässt.

Nachstehend ist die Erfindung anhand eines in der Zeichnung dargestellten Ausführungsbeispiels im Einzelnen erläutert. Es zeigen:
- Fig. 1: eine stark schematisch vereinfacht und abgebrochen dargestellte perspektivische Schrägansicht des der Gondel benachbarten Endbereichs einer Windkraftanlage, die mit zwei erfindungsgemäßen Kühlern versehen ist;
- Fig. 2: eine perspektivische Schrägansicht des Ausführungsbeispiels des erfindungsgemäßen Kühlers;
- Fig. 3 und 4: eine Stirnansicht bzw. Draufsicht des Ausführungsbeispiels des Kühlers;
- Fig. 5: eine gegenüber einer praktischen Ausführungsform in etwa zweifacher Vergrößerung gezeichnete Darstellung des in Fig. 3 mit V bezeichneten Teilbereichs des Ausführungsbeispiels;
- Fig. 6: eine Stirnansicht eines Abschnittes zweier in Luftströmungsrichtung aufeinanderfolgender Reihen von Finnen;
- Fig. 7 und 8: eine perspektivische Schrägansicht bzw. Draufsicht dreier Finnenreihen von in Luftströmungsrichtung aufeinanderfolgenden Finnen; und
- Fig. 9: eine perspektivische Darstellung auf einen Teil eines nicht an einen Hauptholm angeschlossenen Kanals für das zu kühlende Medium in frontseitiger Stirnansicht, wobei die Wandstärken der besseren Darstellung wegen größer dargestellt sind.

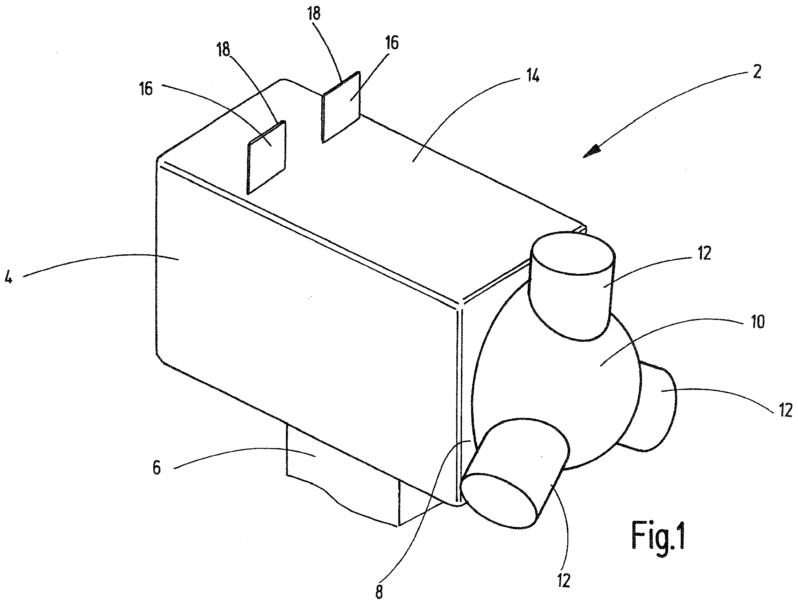

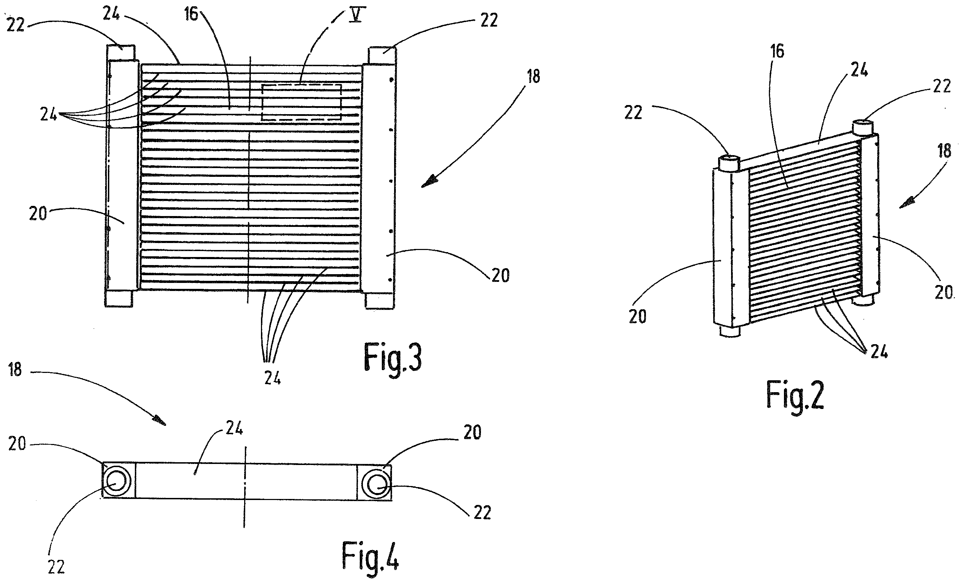

Die Fig. 1 zeigt von einer Windkraftanlage 2 in stark vereinfachter Darstellung lediglich die Gondel 4, die auf einem nur andeutungsweise gezeigten Turm 6 drehbar angeordnet ist. Von einem an der Vorderseite 8 der Gondel 4 befindlichen Rotor sind lediglich eine Nabe 10 mit Blattwurzeln 12 von ansonsten nicht dargestellten Rotorblättern sichtbar. Auf der Oberseite 14 der Gondel 4 sind zwei Kühler 18 gemäß dem Ausführungsbeispiel der Erfindung derart nebeneinanderstehend angeordnet, dass ihre Stirnseiten 16 der entlang der Gondeloberfläche 14 verlaufenden Windströmung ausgesetzt sind. Nähere Einzelheiten der Kühler 18 sind den Fig. 2 bis 9 entnehmbar.

Wie die Fig. 2 und 3 zeigen, ist die dem Windstrom ausgesetzte Stirnseite 16 des Kühlers 18 im Umriss quadratisch. Beidseits schließen sich an die Stirnseite 16 eine Tragstruktur bildende Hauptholme 20 an, die jeder die Form eines stegartigen Hohlkastens mit beliebig geformtem, beim gezeigten Ausführungsbeispiel quadratischem Querschnitt besitzen und jeweils einen Sammelraum für das zu kühlende, flüssige Medium bilden. Bei diesem kann es sich um ein Wasser-Glykol-Gemisch handeln, das durch beim Betrieb der Windkraftanlage anfallende Verlustwärme erhitzt ist, die an die Umgebungsluft abzugeben ist. Für den Zu- und Ablauf des Mediums sind Anschlüsse 22 an den Holmen 20 angeordnet, die einen Mediendurchgang zum Inneren des jeweiligen Sammelraums bilden. Während in Fig. 2 bis 4 die Anschlüsse an den oberen Enden der Holme 20 dargestellt sind, versteht sich, dass bei Anbau der Kühler 18 an der Oberseite 14 der Gondel 4 die Anschlüsse 22 zweckmäßig an der der Gondeloberseite 14 zugewandten Unterseite vorgesehen sind.

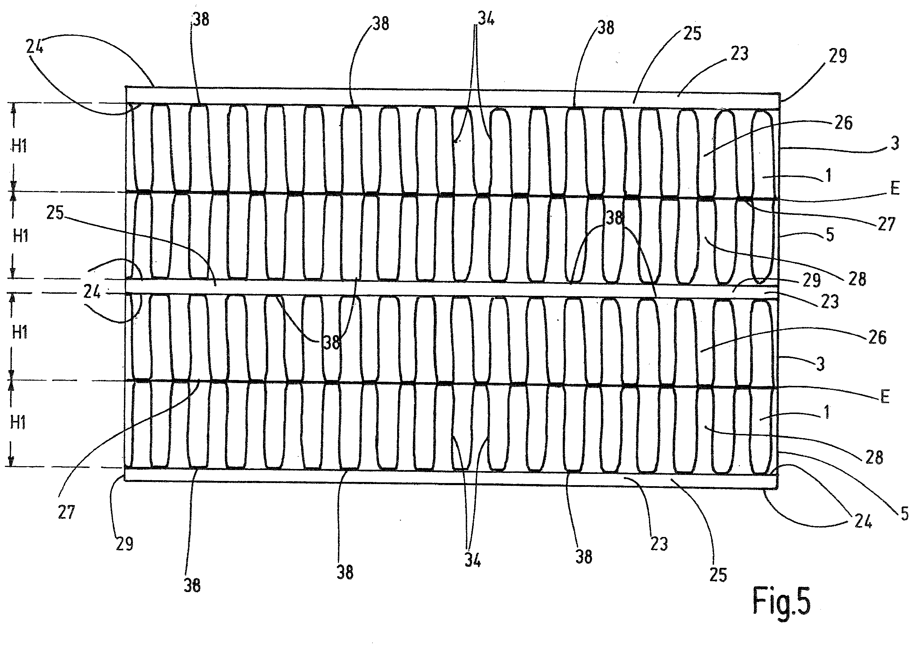

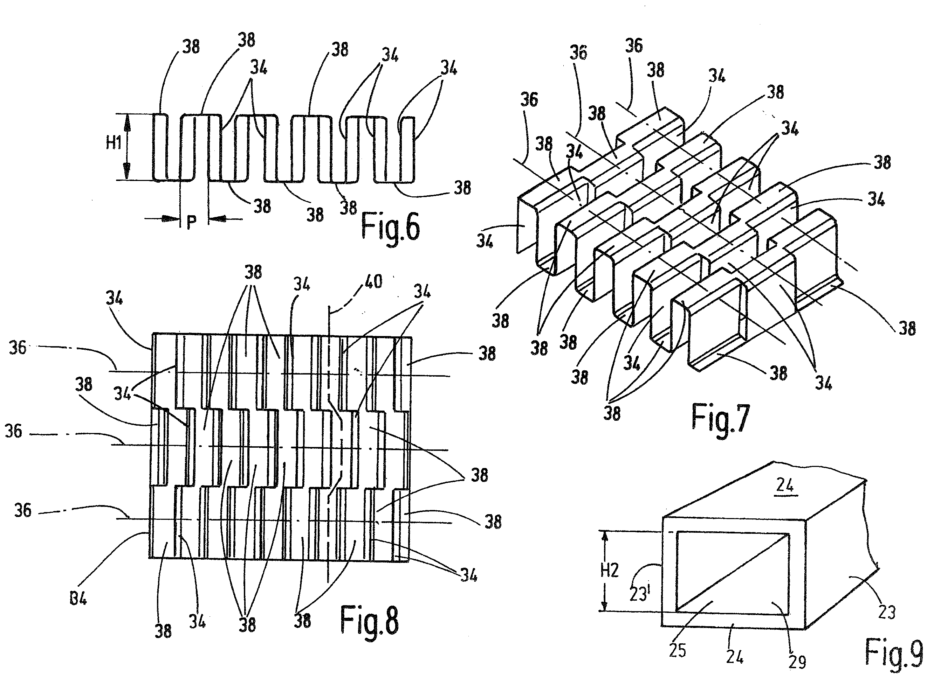

Bei dem in der Zeichnung dargestellten Ausführungsbeispiel beträgt die Seitenlänge des quadratischen Umrisses und damit die zur Ebene der Stirnseite 16 senkrecht gemessene Tiefe des Kühlers 63 mm. Die in der Zeichnungsebene von Fig. 3 gemessene Höhe der Holme 20 und der Abstand der Holme 20 sind so bemessen, dass die Stirnseiten 16 eine dem Umgebungswind ausgesetzte rechteckige Stirnseite 16 als Kühlerfläche aufspannen. Zwischen den Holmen 20 verlaufen Begrenzungswände 24, die in Fig. 2 und 3 nur teilweise beziffert sind und die aus dünnen, ebenflächigen Aluminiumplatten gebildet sind, deren Breite der Seitenlänge der quadratischen Umrissform der Holme 20 entspricht, s. Fig. 4. Die Begrenzungswände 24 sind, s. Fig. 5 und 9, jeweils zu Zweier-Gruppen zusammengefasst, bei denen die Wände 24 in gleichen Abständen voneinander parallel verlaufen und mit einer vorderseitigen Wand 23 und einer rückseitigen Wand 23' zwischen sich einen Kanal 25 für das zu kühlende Medium, insbesondere in Form von Flüssigkeit, bilden. Die in gleichen Abständen voneinander parallel verlaufenden Zweier-Gruppen der Begrenzungswände 24 begrenzen zwischen sich jeweils einen Verbund aus zwei durch eine weitere, als Trennwand (27) dienende Platte getrennten Strömungsräumen 26 und 28, die von der die Kühlfläche bildenden Stirnseite 16 her von der Umgebungsluft durchströmbar sind. Die zwischen den Begrenzungswänden 24 gebildeten Kanäle 25 sind mit ihren Enden jeweils mit dem Sammelraum im Inneren der Holme 20 in Fluidverbindung und sind im Betrieb von dem zu kühlenden, flüssigen Medium durchströmt. Bei dem vorliegenden Beispiel beträgt die zur Kanallängsrichtung quer gemessene Weite der Kanäle 25 jeweils 3 mm.

Der in den Figuren gezeigte Kühler 18 ist aus einzelnen Kühlelementen 1 in Stapelbauweise mit den parallel zueinander verlaufenden Kanälen 25 gebildet. Dabei weist ein einzelnes Kühlelement 1 auf jeden Fall einen Verbund mit zwei Lagen 3, 5 der mäandernden Finnen 34 auf, wobei die beiden Lagen 3, 5 eines Kühlelementes 1 von der Trennwand 27 separiert sind, die jeweils in einer horizontalen Ebene E verläuft.

Wie insbesondere die Fig. 9 zeigt, ist der jeweilige Kanal 25 mit rechteckförmigem, insbesondere quadratischem Querschnitt auf der Ober- und Unterseite von den Wänden 24 begrenzt sowie von einer vorderseitigen Wand 23 und einer rückseitigen Wand 23'. Der angesprochene Kanal 25 spannt insoweit eine Art Strömungsraum 29 auf, der frei von Hindernissen gehalten eine laminare Durchströmung des Kanals 25 mit dem zu kühlenden, flüssigen Medium in einer Durchströmungsrichtung erlaubt.

Die vertikale Höhe H1 einer jeden Finne 34, quer zur Durchströmungsrichtung des flüssigen Mediums gesehen, hat mindestens dieselbe Höhe H2 wie der freie Durchströmungsquerschnitt des Strömungsraums 29 des benachbart angeordneten Kanals 25, parallel zur Erstreckung der jeweiligen Finne 34 in deren Höhenausrichtung gesehen. In jeder Lage 3, 5 existiert wiederum eine Mehrzahl von Finnenreihen 36 mehrerer Finnen 34, die in horizontaler Richtung hintereinander angeordnet sind (s. Fig. 7 und 8), und jeweils in Durchströmungsrichtung des Kanals 25 gesehen, einen Versatz P (s. Fig. 6) zueinander aufweisen. In horizontaler Richtung auf die Stirnseite des Kühlers 18 gesehen ist dieser axiale Versatz P der hintereinander angeordneten Finnenreihen 36 zu sehen.

Wie den Fig. 5 bis 9 entnehmbar ist, befinden sich für die Übertragung der Wärme des die Kanäle 25 durchströmenden, flüssigen Mediums auf die die Strömungsräume 26 und 28 durchströmende Luft in den Strömungsräumen 26, 28 Finnen 34, deren Oberflächen von der durchströmenden Kühlluft angeströmt sind. Wie am deutlichsten die Fig. 7 und 8 zeigen, sind die in den Figuren nur teilweise bezifferten Finnen 34 in den Finnenreihen 36 angeordnet, wobei sich die Finnenreihen 36 in zur Ebene der Stirnseite 16 paralleler Richtung erstrecken und die Finnenreihen 36 in Strömungsrichtung gesehen hintereinander angeordnet sind. Die gleich ausgebildeten Finnen 34 sind jeweils durch Blechteile aus Aluminiumblech mit rechteckförmigem Umriss gebildet, wobei die Blechstärke beim vorliegenden Ausführungsbeispiel 0,2 mm beträgt. Die Finnen 34 verlaufen in zur Luftströmungsrichtung paralleler und zur Längsrichtung der Kanäle 25 senkrechter Richtung und besitzen die Höhe H1, die der Höhe des zugehörigen Strömungsraums 26 oder 28 entspricht. Beim vorliegenden Beispiel beträgt die Höhe der Strömungsräume 26 sowie 28 und dementsprechend die Höhe H1 der Finnen 34 10,3 mm. An den an die Begrenzungswände 24 angrenzenden Enden sind die Finnen 34 über das Blechmaterial einstückig fortsetzende, Umlenkstellen 38 bildende Verbindungsstege (in den Figuren ebenfalls nicht sämtlich beziffert), verbunden, die ebenflächig an der zugewandten Begrenzungswand 24 anliegen und daran durch Kleben oder Schweißen festgelegt sind. Durch die ebenflächige Anlage der Umlenkstellen 38 ist jede Finne 34 in gutem wärmeleitendem Kontakt mit einem Kanal 25. Dies gilt ebenfalls für die Anlenkung der Finnen 34 an die eine Trennwand 27 aufspannende Platte, die jeweils in horizontaler Richtung verläuft.

Wie die Fig. 7 und 8 zeigen, sind die Reihen 36 der Finnen 34 in der Luftströmungsrichtung mit den Strömungsräumen 26 abstandsfrei hintereinander angeordnet, wobei aufeinanderfolgende Finnenreihen 36 jeweils um die halbe Breite der Verbindungsstege oder Umlenkstellen 38 alternierend nach der einen und der anderen Seite in Längsrichtung der Kanäle 25 und damit, in deren Durchströmungsrichtung gesehen, axial verschoben sind. Wie in Fig. 8 mit gestrichelter Linie 40 angedeutet ist, sind dadurch für den Luftdurchstrom durch die Strömungsräume 26 mittels der Strömungsteilung zickzackartig verlaufende Strömungswege gebildet. Die in Strömungsrichtung gemessene Breite der Finnen 34 respektive deren Tiefe entspricht beim vorliegenden Beispiel der Höhe H1 der Finnen 34, wobei die Anzahl der Finnenreihen 36 in Strömungsrichtung gemessen so gewählt ist, dass die Tiefe des vorliegenden Ausführungsbeispiels des Kühlers 63 mm beträgt. Die in Längsrichtung der Kanäle 29 gemessene Breite der Verbindungsstege 38 ist so gewählt, dass der in Fig. 6 mit P bezeichnete Versatz der Finnen 34 beim vorliegenden Ausführungsbeispiel 5 mm beträgt.

Die bei der Erfindung vorgesehene Anordnung der Finnenreihen 36 und deren geometrische Gestaltung mit über die Verbindungsstege 38 gebildeten Kontaktflächen als Umlenkstellen an den Begrenzungswänden 24 ermöglicht eine besonders wirksame Wärmekopplung für den Wärmeübergang vom erwärmten Medium in den Kanälen 25 zu den Finnen 34, die mit großflächigen Oberflächen von Luft angeströmt sind. Dadurch, dass zudem die Finnenreihen 36 jedes Strömungsraums sowohl mit luftführenden Kanälen 26 als auch mit den Kanälen 28 in Wärmeaustausch sind, stellen die erfindungsgemäßen Kühler eine Kühlleistung zur Verfügung, die es ermöglicht, die Kühler 18 bei freier Wahl der Anbringlage an der Gondel 4 einer Windkraftanlage für die Abfuhr der im Betrieb anfallenden Verlustwärme ohne unterstützende, motorgetriebene Hilfsgebläse einzusetzen. Dies hat so keine Entsprechung im Stand der Technik.

## Patentansprüche

1. Kühler, mit einzelnen Kühlelementen (1) in Stapelbauweise mit parallel zueinander verlaufenden Kanälen (25), die für die Durchströmung mit zu kühlendem, flüssigem Medium jeweils einen Strömungsraum (29) begrenzen, zwischen denen sich mindestens zwei Lagen (3, 5) einzelner Finnenreihen (36) mäandernder Finnen (34) erstrecken, die für die Durchströmung von Luft je einen weiteren Strömungsraum (26, 28) miteinander begrenzen, wobei der jeweils eine Strömungsraum (29) frei von Hindernissen eine laminare Durchströmung des zuordenbaren Kanals (25) mit dem flüssigen Medium in einer Durchströmungsrichtung ermöglicht, dass die Höhe (H1) einer jeden Finne (34) quer zur Durchströmungsrichtung des flüssigen Mediums gesehen mindestens dieselbe Höhe (H2) hat wie der freie Durchströmungsquerschnitt des Strömungsraums (29) des benachbart angeordneten Kanals (25), parallel zur Erstreckung der jeweiligen Finne (34) gesehen, und in jeder Lage (3, 5) eine Mehrzahl von Finnenreihen (36) mehrerer Finnen (34) hintereinander angeordnet ist, die jeweils in Durchströmungsrichtung des Kanals (25) gesehen einen Versatz (P) zueinander aufweisen,
wobei der Strömungsraum (29) eines jeden Kanals (25) einen freien Öffnungsquerschnitt aufweist, der von ausschließlich rechteckförmigen, umfangsseitigen Kanalwänden (23, 23', 24) begrenzt ist,
wobei sich die Finnenreihen (36) und die Kanäle (25) zwischen zwei medienführenden Hauptholmen (20) erstrecken, die die Fluidverbindungen mit den Kanälen (25) bilden und eine rechteckförmige Stirnseite (16) als Kühlerfläche aufspannen,
wobei die einzelnen Kühlelemente (1) in Stapelbauweise mit den parallel zueinander verlaufenden Kanälen (25) gebildet sind **dadurch gekennzeichnet,**
**dass** jedes einzelne Kühlelement (1) einen Verbund mit zwei Lagen (3, 5) der mäandernden Finnen (34) aufweist,
**dass** die beiden Lagen (3, 5) eines Kühlelementes (1) von einer Trennwand (27) separiert sind, die jeweils in einer horizontalen Ebene (E) verläuft, und
**dass** die Kanalwände (23, 23', 24) eines jeden Kanals (25) eine Materialdicke in der Wandstärke einer jeweiligen Finne (34) aufweisen.

2. Kühler nach Anspruch 1, wobei zumindest ein Teil der Finnen (34) einer jeden Lage (3, 5) aneinander anschließend sich jeweils stegartig unter Bildung einer Wellenform zwischen zwei jeweils gegenüberliegenden Umlenkstellen (38) erstreckt und dass in einer gemeinsamen, an die benachbart angeordneten Kanäle (25) eines Kühlelements (1) sich anschließenden Ebene (E) an dieser anliegend Umlenkstellen (38) zweier einander benachbarter Lagen (3, 5) deckungsgleich aufeinander zugewandt sind.

3. Kühler nach Anspruch 2, wobei in der jeweiligen Ebene (E) die Trennwand (27) parallel zur Durchströmungsrichtung des flüssigen Mediums in den Kanälen (25) verläuft.

4. Kühler nach Anspruch 3, wobei die jeweilige Trennwand (27) dieselbe Materialstärke aufweist wie die die Wellenform ausbildenden Finnen (34).

5. Kühler nach einem der vorstehenden Ansprüche, wobei die Höhe (H1) einer einzelnen, stegartigen Finne (34), vorzugsweise das Drei- bis Sechsfache, besonders bevorzugt das Fünffache, der Höhe (H2) des Strömungsraumes (29) für einen Kanal (25), beträgt.

6. Kühler nach einem der vorstehenden Ansprüche, wobei der Versatz (P) derart gewählt ist, dass eine zwischen zwei parallel zueinander verlaufenden, zueinander versatzfreien Finnenreihen (36) angeordnete weitere Finnenreihe (36) mit ihrer jeweiligen Finne (34) um einen vorgebbaren axialen Abstand, parallel zu dem jeweiligen Kanal (25), in dessen Durchströmungsrichtung gesehen, zu den benachbarten Finnen (34) der beiden angrenzenden Finnenreihen (36) versetzt verläuft.

7. Kühler nach einem der vorstehenden Ansprüche, wobei der Versatz (P) zwischen 3 mm und 8 mm, vorzugsweise zwischen 4 mm bis 6 mm, besonders bevorzugt zwischen 5 mm und 5,9 mm, beträgt.

8. Kühler nach einem der vorstehenden Ansprüche, wobei die Höhe (H1) einer einzelnen Finne (34), quer zur Durchströmungsrichtung eines Kanals (25) gesehen, zwischen 5 mm und 15 mm, vorzugsweise 12 mm, beträgt und dass die Gesamttiefe eines jeden Kühlerelements (1) mit mehreren hintereinander angeordneten Finnenreihen (36) zwischen 60 mm und 90 mm, vorzugsweise bei 63 mm und 82 mm, Tiefe liegt.

9. Kühler nach einem der vorstehenden Ansprüche, wobei die Wandstärke der aus einem Blechmaterial geformten Finnen (34) 0,15 mm bis 0,4 mm, bevorzugt 0,2 mm, beträgt und die Wandstärke der aus Blechmaterial bestehenden Platte als Trennwand (27) zwischen den Finnenreihen (36) 0,2 mm bis 0,8 mm, bevorzugt 0,4 mm, beträgt.

10. Kühler nach einem der vorstehenden Ansprüche, wobei die Mäanderform der jeweiligen Finnenreihe (36) parallel zueinander verlaufende, stegartige Finnen (34) aufweist und dass zwei benachbarte Finnen (34) der Finnenreihen (36) jeweils über die Umlenkstellen (38) in Form von Verbindungsstegen miteinander einstückig verbunden sind, die parallel zu den Kanälen (25) mit deren Begrenzungswänden (24), in deren Durchströmungsrichtung verlaufen.

11. Kühler nach einem der vorstehenden Ansprüche, wobei 20 bis 48, vorzugsweise 25 bis 63, besonders bevorzugt 54, Kanäle (25) die wirksame Kühlerfläche bilden.

12. Windkraftanlage, unfassend mindestens ein Kühler nach einem der vorstehenden Ansprüche und einer räumlich zugeordneten Gondel (4) der Anlage, zwecks lüfterfreien Durchströmens der Strömungsräume (26, 28) mittels des Flügelluftstroms und/oder der windgetriebenen Umgebungsluft.

## Claims

1. Cooler, with individual cooling elements (1) in a stacked construction with channels (25) running in parallel with one another, each of which delimits a flow chamber (29) for the liquid medium to be cooled to flow through, between which channels at least two layers (3, 5) of individual fin rows (36) of meandering fins (34) extend, which, with one another, in each case delimit a further flow chamber (26, 28) for air to flow through, wherein the respective one flow chamber (29) permits the liquid medium to flow in a laminar manner through the assignable channel (25) in one throughflow direction without any obstacles, in that the height (H1) of each fin (34), viewed across the throughflow direction of the liquid medium, is at least the same height (H2) as the free throughflow cross-section of the flow chamber (29) of the adjacently arranged channel (25), viewed parallel to the extension of the respective fin (34), and in each layer (3, 5) a plurality of fin rows (36) of a plurality of fins (34) are arranged one behind the other, each having an offset (P) to one another when viewed in the throughflow direction of the channel (25),
wherein the flow chamber (29) of each channel (25) has a free opening cross-section, which is delimited by exclusively rectangular, peripheral channel walls (23, 23', 24),
wherein the fin rows (36) and the channels (25) extend between two media-conveying main spars (20), which form the fluid connections with the channels (25) and span a rectangular end face (16) as a cooler surface,
wherein the individual cooling elements (1) are formed in a stacked construction with the channels (25) running in parallel with one another,
**characterised in that**
each individual cooling element (1) comprises a composite with two layers (3, 5) of the meandering fins (34),
that the two layers (3, 5) of a cooling element (1) are separated by a separating wall (27), which in each case runs in a horizontal plane (E), and
**in that** the channel walls (23, 23', 24) of each channel (25) have a material thickness in the wall thickness of each fin (34).

2. Cooler according to claim 1, wherein at least some of the fins (34) of each layer (3, 5), abutting one another, extend in a web-like manner in each case, forming a wave form between two opposite deflection points (38) and in that, in a common plane (E) abutting the adjacently arranged channels (25) of a cooling element (1), deflection points (38) of two adjacent layers (3, 5) lying on said plane face one another congruently.

3. Cooler according to claim 2, wherein, in the respective plane (E), the separating wall (27) runs in parallel with the flow direction of the liquid medium in the channels (25).

4. Cooler according to claim 3, wherein the respective separating wall (27) has the same material thickness as the fins (34) forming the wave form.

5. Cooler according to any of the preceding claims, wherein the height (H1) of an individual, web-like fin (34) is preferably three to six times, more preferably five times, the height (H2) of the flow chamber (29) for a channel (25).

6. Cooler according to any of the preceding claims, wherein the offset (P) is selected such that a further fin row (36), with its respective fin (34), arranged between two fin rows (36) running parallel with one another without any offset, runs, offset by a pre-definable axial distance, in parallel with the respective channel (25), viewed in the flow direction thereof, with respect to the adjacent fins (34) of the two abutting fin rows (36).

7. Cooler according to any of the preceding claims, wherein the offset (P) is between 3 mm and 8 mm, preferably between 4 mm to 6 mm, more preferably between 5 mm and 5.9 mm.

8. Cooler according to any of the preceding claims, wherein the height (H1) of an individual fin (34), viewed across the throughflow direction of a channel (25), is between 5 mm and 15 mm, preferably 12 mm, and in that the overall depth of each cooling element (1) with a plurality of fin rows (36) arranged one behind the other is between 60 mm and 90 mm, preferably 63 mm and 82 mm, deep.

9. Cooler according to any of the preceding claims, wherein the wall thickness of the fins (34) formed from sheet material is 0.15 mm to 0.4 mm, preferably 0,2 mm, and the wall thickness of the plate consisting of sheet material as a separating wall (27) between the fin rows (36) is 0.2 m to 0.8 mm, preferably 0.4 mm.

10. Cooler according to any of the preceding claims, wherein the meandering form of the respective fin row (36) comprises web-like fins (34) running in parallel with one another and in that two adjacent fins (34) of the fin rows (36) are in each case integrally connected to one another via the deflection points (38) in the form of connecting webs, which run in parallel with the channels (25) with their delimiting walls (24), in the throughflow direction thereof.

11. Cooler according to any of the preceding claims, wherein 20 to 48, preferably 25 to 63, more preferably 54, channels (25) form the effective cooler surface.

12. Wind turbine, comprising at least one cooler according to any of the preceding claims and a spatially assigned nacelle (4) of the turbine, for the purpose of generating a fan-free throughflow through the flow chambers (26, 28) by means of the blade air flow and/or the wind-driven ambient air.

## Revendications

1. Dispositif de refroidissement, comprenant divers éléments (1) de refroidissement en mode de construction empilé ayant des conduits (25) s'étendant parallèlement entre eux, qui délimitent, pour le passage de milieu fluide à refroidir, respectivement un espace (29) d'écoulement, entre lesquels s'étendent au moins deux couches (3, 5) de diverses rangées (36) d'ailettes (34) sinueuses, qui délimitent entre elles, pour le passage de l'air, respectivement un autre espace (26, 28) d'écoulement, dans lequel le respectivement un espace (29) d'écoulement exempt d'obstacle autorise un écoulement laminaire dans un sens d'écoulement du fluide liquide dans le conduit (25), qui peut lui être affecté, en ce que la hauteur (H1) de chaque ailette (34), considérée transversalement à la direction d'écoulement du milieu liquide, a au moins la même hauteur (H2) que la section transversale libre d'écoulement de l'espace (29) d'écoulement du conduit (25) voisin, considéré parallèlement à l'étendue de l'ailette (34) respective, et dans chaque couche (3, 5), est disposée l'un derrière l'autre une pluralité de rangées (36) de plusieurs ailettes (34), qui, considérées dans le sens d'écoulement du conduit (25), ont un décalage (P) les unes par rapport aux autres,
dans lequel l'espace (29) d'écoulement de chaque conduit (25) a une section transversale libre, qui est délimitée par des parois (23, 23', 24) de conduit du côté du pourtour exclusivement rectangulaire,
dans lequel les rangées (36) d'ailettes et les conduits (25) s'étendent entre deux longerons (20) principaux conduisant des fluides, qui forment les communications fluidiques avec les conduits (25) et qui sous-tendent un côté (16) frontal rectangulaire comme surface de refroidissement,
dans lequel les divers éléments (1) de refroidissement, en mode de construction empilé, sont formés par les conduits (25) s'étendant parallèlement entre eux,
**caractérisé**
**en ce que** chaque élément (1) individuel de refroidissement comporte un composite de deux couches (3, 5) des ailettes (34) sinueuses,
**en ce que** les deux couches (3, 5) d'un élément (1) de refroidissement sont séparées par une cloison (27), qui s'étend respectivement dans un plan (E) horizontal, et
**en ce que** les parois (23, 23', 24) de chaque conduit (25) ont une épaisseur de matériau dans l'épaisseur de paroi de chaque ailette (34).

2. Dispositif de refroidissement suivant la revendication 1, dans lequel au moins une partie des ailettes (34) de chaque couche (3, 5) s'étend en se raccordant l'une à l'autre respectivement à la manière d'une réglette, avec formation d'une forme ondulée entre deux points (38) de renvoi opposés respectivement et en ce que dans un plan (E) commun, se raccordant aux conduits (25) voisins d'un élément (1) de refroidissement, des points (38) de renvoi, s'appliquant à celui-ci, de deux couches (3, 5) voisines, l'une de l'autre sont tournés l'un vers l'autre en coïncidence.

3. Dispositif de refroidissement suivant la revendication 2, dans lequel dans le plan (E) respectif, la cloison (27) s'étend parallèlement à la direction de passage du milieu liquide dans les conduits (25).

4. Dispositif de refroidissement suivant la revendication 3, dans lequel la cloison (27) respective a la même épaisseur de matériau que les ailettes (34) formant la forme ondulée.

5. Dispositif de refroidissement suivant l'une des revendications précédentes,
dans lequel la hauteur (H1) d'une ailette (34) individuelle de type réglette, représente, de préférence, du triple au sextuple, d'une manière particulièrement préférée, le quintuple, de la hauteur (H2) de l'espace (29) d'écoulement d'un conduit (25).

6. Dispositif de refroidissement suivant l'une des revendications précédentes,
dans lequel le décalage (P) est choisi, de manière à ce qu'une autre rangée (36) d'ailettes, disposée entre deux rangées (36) d'ailettes s'étendant parallèlement entre elles sans décalage l'une par rapport à l'autre, s'étende par ses ailettes (34) respectives, d'une distance axiale pouvant être donnée à l'avance, parallèlement au conduit (25) respectif, considéré dans sa direction d'écoulement, en étant décalées par rapport aux ailettes (34) voisines des deux rangées (36) d'ailettes voisines.

7. Dispositif de refroidissement suivant l'une des revendications précédentes,
dans lequel le décalage (P) est compris entre 3 mm et 8 mm, de préférence entre 4 mm et 6 mm, d'une manière particulièrement préférée entre 5 mm et 5,9 mm.

8. Dispositif de refroidissement suivant l'une des revendications précédentes, dans lequel la hauteur (H1) d'une ailette (34) individuelle, considérée transversalement à la direction d'écoulement dans un conduit (25), est comprise entre 5 mm et 15 mm, en étant de préférence de 12 mm, et en ce que la profondeur totale de chaque élément (1) de refroidissement ayant plusieurs rangées (36) d'ailettes, disposées les unes derrière les autres, est comprise entre 60 mm et 90 mm, en étant de préférence de 63 mm et de 82 mm.

9. Dispositif de refroidissement suivant l'une des revendications précédentes, dans lequel l'épaisseur de paroi des ailettes (34) en matériau de tôle, va de 0,15 mm à 0,4 mm, en étant de préférence de 0,2 mm et l'épaisseur de paroi de la plaque en matériau de tôle servant de cloison (27) entre les rangées (36) d'ailettes, va de 0,2 mm à 0,8 mm, en étant de préférence de 0,4 mm.

10. Dispositif de refroidissement suivant l'une des revendications précédentes,
dans lequel la forme sinueuse de la rangée (36) respective d'ailettes, comporte des ailettes (34) de type en réglette s'étendant parallèlement entre elles et en ce que deux ailettes (34) voisines des rangées (36) d'ailettes sont reliées d'une seule pièce l'une à l'autre par les points (38) de retour sous la forme de réglettes de liaison, qui s'étendent parallèlement aux conduits (25) par leurs parois (24) de délimitation, dans leur direction d'écoulement.

11. Dispositif de refroidissement suivant l'une des revendications précédentes, dans lequel de 20 à 48, de préférence de 25 à 63, d'une manière particulièrement préférée 54, conduits (25), forment la surface efficace de refroidissement.

12. Eolienne, comprenant au moins un dispositif de refroidissement suivant l'une des revendications précédentes, et une nacelle (4), associée spatialement, de l'éolienne en vue du passage sans ventilateur dans les espaces (26, 28) d'écoulement, au moyen du courant d'air de pale et/ou de l'air ambiant entraîné par le vent.
